# DEMANDE DE BREVET EUROPEEN

(11) **EP 4 044 009 A1**
(43) Date de publication de la demande: **17.08.2022**
(21) Numéro de dépôt: 21305177.4
(22) Date de dépôt: 10.02.2021
(51) Int. Cl.: G06F 3/044, A63B 71/00, G09F 27/00

(54) **INSTALLATION SPORTIVE COMPRENANT UN SYSTÈME D'INTERFACE AVEC UNE APPLICATION SPORTIVE**

(71) Demandeur: NGTV Experience, 69500 Bron (FR)
(72) Inventeur: NOE, Guillaume, 69200 VENISSIEUX (FR); VERNAY, Tristan, 69200 VENISSIEUX (FR)
(74) Mandataire: Germain Maureau

(57) **Abrégé**

Le présent exposé concerne une installation sportive comprenant une enceinte (13) délimitant au moins partiellement un terrain de sport (15), l'enceinte (13) comprenant au moins une paroi transparente (17), et un système d'interface disposé à l'extérieur de l'enceinte (13), le système d'interface comprenant : un film tactile (21) agencé contre la paroi transparente (17), le film tactile (21) comprenant une pluralité d'électrodes agencées dans un substrat, le film tactile (21) étant configuré pour recevoir une commande d'un utilisateur, et un écran (23) disposé en regard du film tactile (21) permettant d'afficher une partie d'une interface utilisateur d'une application sportive déterminée en fonction de la commande de l'utilisateur.

## Description

Le présent exposé se rapporte à une installation sportive comprenant une enceinte et un système d'interface avec une application sportive.

Il est connu de l'état de la technique des applications sportives permettant par exemple le suivi d'une session sportive par les joueurs. Toutefois, l'interface physique permettant d'utiliser cette application se trouvant à proximité du terrain de sport, accessible aux joueurs est alors exposée à des dommages. En outre, certains types de sport se pratiquant dans une enceinte fermée, comme le padel, le hockey ou le squash, il fallait sortir de l'enceinte pour pouvoir interagir avec l'application sportive.

Le présent exposé a pour but de résoudre tout ou partie des inconvénients mentionnés ci-dessus.

Le présent exposé concerne une installation sportive comprenant :
- une enceinte délimitant au moins partiellement un terrain de sport, l'enceinte comprenant au moins une paroi transparente, et
- un système d'interface, disposé à l'extérieur de l'enceinte, le système d'interface comprenant :
   ∘ un film tactile agencé contre la paroi transparente, le film tactile comprenant une pluralité d'électrodes agencées dans un substrat, le film tactile étant configuré pour recevoir une commande d'un utilisateur, et
   ∘ un écran disposé en regard du film tactile permettant d'afficher une partie d'une interface utilisateur d'une application sportive déterminée en fonction de la commande de l'utilisateur.

On comprend que le film tactile est en contact avec la paroi transparente. Par exemple, le film tactile est collé sur la paroi transparente. On comprend que le film tactile est disposé entre la paroi transparente et l'écran.

Grâce à ces dispositions, les utilisateurs de l'installation sportive peuvent interagir avec l'application sportive sans qu'il soit nécessaire de sortir de l'enceinte. En outre, les risques d'endommagement du système d'interface sont réduits.

Dans certains modes de réalisation, la paroi transparente comprend une surface intérieure, faisant face à l'intérieur de l'enceinte et une surface extérieure, faisant face à l'extérieur de l'enceinte, le film tactile étant fixé sur la surface extérieure de la paroi transparente.

Dans certains modes de réalisation, l'écran est superposé au film tactile, de sorte que depuis l'intérieur de l'enceinte, l'écran soit visible à travers le film tactile.

On comprend que le film tactile est transparent.

Dans certains modes de réalisation, l'écran est disposé à distance du film tactile.

Grâce à ces dispositions, les risques de détérioration de l'écran dus à un choc sur la paroi transparente sont limités.

Dans certains modes de réalisation, l'écran est disposé à une distance du film tactile inférieure ou égale à 10 cm.

L'écran peut être est disposé à une distance du film tactile inférieure ou égale à 7 cm.

L'écran peut être est disposé à une distance du film tactile inférieure à 5 cm.

L'écran peut être est disposé à une distance du film tactile supérieure ou égale à 1 cm.

Dans certains modes de réalisation, le système d'interface comprend un microcontrôleur configuré pour permettre l'affichage sur l'écran de la partie de l'interface utilisateur déterminée en fonction de la commande de l'utilisateur via le film tactile.

Dans certains modes de réalisation, la commande de l'utilisateur est déterminée en fonction de données de positionnement d'un objet, tel que le doigt de l'utilisateur, amené à proximité du film tactile.

Par exemple, l'objet peut être un doigt de l'utilisateur, ou bien un objet configuré pour pouvoir interagir avec les électrodes du film tactile tel qu'un stylet tactile.

A partir de données de positionnement fournies par le film tactile, le microcontrôleur est configuré pour identifier la commande de l'utilisateur et permettre l'affichage sur l'écran d'une partie de l'interface utilisateur de l'application sportive que l'utilisateur souhaite consulter ou d'une modification de la partie de l'interface utilisateur souhaitée par l'utilisateur.

Dans certains modes de réalisation, le système d'interface comprend un contrôleur du film tactile, configuré pour générer des données de positionnement de l'objet amené à proximité du film tactile en fonction de mesures réalisées au moyen des électrodes.

Dans certains modes de réalisation, le système d'interface comprend un système d'enregistrement, par exemple une caméra, relié au microcontrôleur.

Dans certains modes de réalisation, l'installation sportive comprend un bras disposé à l'extérieur de l'enceinte et configuré pour porter le système d'enregistrement.

Grâce à ces dispositions, les risques de détérioration du système d'enregistrement sont limités.

L'application sportive peut être une application en ligne. L'application sportive peut avoir une fonction de paramétrage du système d'enregistrement du système d'interface. L'application sportive peut avoir une fonction de comptage des points d'une session sportive. L'application sportive peut avoir une fonction d'identifier des événements prédéterminés lors d'une session sportive et d'émettre un signal lorsque ces événements se produisent.

D'autres caractéristiques et avantages du présent exposé apparaîtront à la lecture de la description qui va suivre et à l'examen des figures annexées.

La figure 1 représente un mode de réalisation de l'installation sportive selon le présent exposé.

La figure 2 représente un mode de réalisation du système d'interface de l'installation sportive selon le présent exposé.

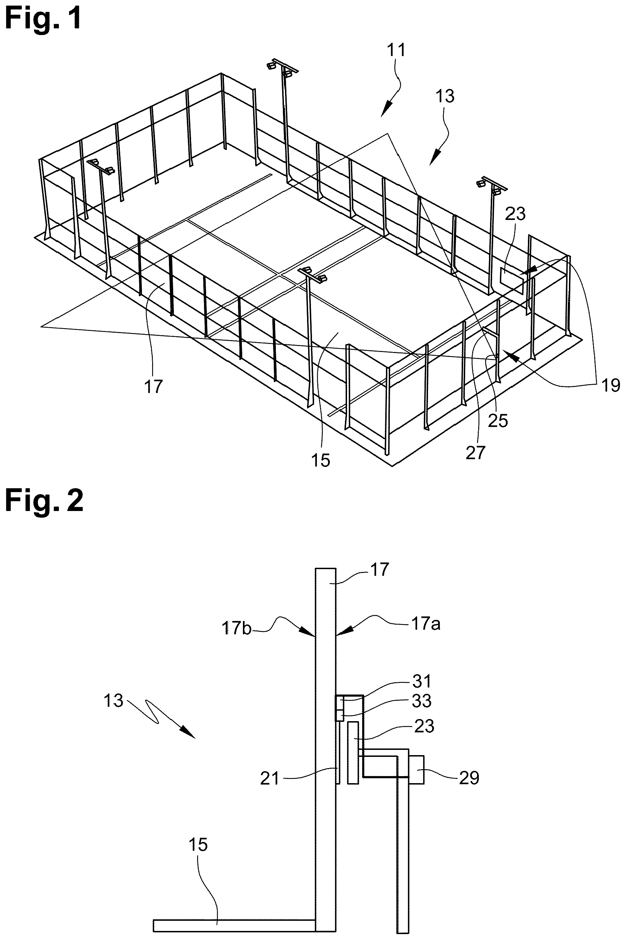

La figure 1 représente une installation sportive 11. L'installation sportive 11 comprend enceinte 13 délimitant au moins partiellement un terrain de sport 15. L'enceinte 13 comprenant au moins une paroi transparente 17.

L'installation sportive 11 comprend un système d'interface 19, disposé à l'extérieur de l'enceinte 13.

Le système d'interface 19 est représenté sur la figure 2. Le système d'interface 19 comprend un film tactile 21 agencé contre la paroi transparente 17 de l'enceinte 13. Ici, le film tactile 21 est disposé contre une surface extérieure 17a de la paroi transparente 17, faisant face à l'extérieur de l'enceinte 13. La surface extérieure 17a de la paroi transparente 17 est opposée à la surface intérieure 17b de la paroi transparente 17, qui fait face à l'intérieur de l'enceinte 13. Par exemple, le film tactile 21 est collé sur la surface extérieure 17a de la paroi transparente 17. Toutefois, le film tactile 21 peut être fixé sur la paroi transparente 17 partout autre moyen connu de l'homme du métier.

Le système d'interface 19 comprend également un écran 23 disposé en regard du film tactile 21 permettant d'afficher une partie de l'interface utilisateur d'une application sportive déterminée en fonction d'une commande de l'utilisateur réceptionnée par le film tactile 21. Autrement dit, l'écran 23 est superposé au film tactile 21, de sorte que depuis l'intérieur de l'enceinte 13, l'écran 23 soit visible à travers le film tactile 21. En effet, le film tactile 21 est transparent. Le film tactile 21 est disposé entre la paroi transparente 17 et l'écran 23.

Ainsi, les utilisateurs de l'installation sportive 11 peuvent interagir avec l'application sportive sans qu'il soit nécessaire de sortir de l'enceinte 13. En outre, les risques d'endommagement du système d'interface 19 sont réduits, celui-ci étant disposé à l'extérieur de l'enceinte 13.

Comme représenté sur la figure 2, l'écran 23 peut être disposé à distance du film tactile 21, afin de limiter les risques d'endommagement de l'écran 23 liés à un choc sur la paroi transparente 17. Par exemple, l'écran 23 est disposé à une distance du film tactile 21 inférieure ou égale à 10 cm. L'écran 23 peut être est disposé à une distance du film tactile 21 supérieure ou égale à 1 cm.

Le système d'interface 19 comprend également un système d'enregistrement, par exemple une caméra 25. La caméra 25 peut être installée sur un bras 27 de l'installation sportive 11, disposé à l'extérieur de l'enceinte 13. La caméra 25 étant disposée à l'extérieur de l'enceinte, les risques d'endommagement de celle-ci sont limités. La caméra 25 est orientée vers le terrain de sport 15 de sorte à pouvoir enregistrer des images d'une session sportive.

L'application sportive peut être une application en ligne. L'application sportive peut avoir une fonction de paramétrage de la caméra 25. L'application sportive peut avoir une fonction de comptage des points d'une session sportive. L'application sportive peut avoir une fonction d'identifier des événements prédéterminés lors d'une session sportive et d'émettre un signal lorsque ces événements se produisent.

Le système d'interface 19 comprend un microcontrôleur 29. Le microcontrôleur 29 peut être le microcontrôleur d'un ordinateur, d'une tablette, d'un ordiphone, etc. Le film tactile 21, l'écran 23 et la caméra 25 sont reliés au microcontrôleur 29. Le microcontrôleur 29 est configuré pour permettre l'affichage sur l'écran 23 d'une partie de l'interface utilisateur déterminée en fonction de la commande de l'utilisateur via le film tactile 21.

Le système d'interface comprend également un contrôleur 31 du film tactile 21, configuré pour générer des données de positionnement d'un objet amené à proximité du film tactile 21. Par exemple, l'objet peut être un doigt de l'utilisateur, ou bien un objet configuré pour pouvoir interagir avec les électrodes du film tactile tel qu'un stylet. La commande de l'utilisateur est interprétée par le microcontrôleur 29 en fonction de données de positionnement de l'objet fournies par le contrôleur 31 du film tactile 21. Le microcontrôleur 29 est donc configuré pour identifier la commande de l'utilisateur à partir de ces données de positionnement, et contrôler l'écran 23 pour afficher une partie de l'interface utilisateur de l'application sportive que l'utilisateur souhaite consulter ou afficher une modification de la partie de l'interface utilisateur souhaitée par l'utilisateur. Le film tactile 21 permet à un utilisateur d'interagir directement avec ce qui est affiché sur l'écran 23, plutôt qu'indirectement avec une souris ou un pavé tactile.

Ici, le film tactile 21 comprend un capteur tactile capacitif. Le film tactile 21 comprend donc des électrodes agencées dans au moins un substrat. Toutefois, le film tactile 21 pourrait comprendre un capteur tactile de type résistif ou à ondes acoustiques de surface par exemple.

Les données de positionnement générées par le contrôleur 31 du film tactile 21 sont donc calculées, ici, en fonction de mesures réalisées au moyen des électrodes.

En effet, lorsque l'objet touche ou vient à proximité du film tactile 21 capacitif, une variation de capacité se produit à l'emplacement du toucher ou à proximité. Le contrôleur 31 du film tactile 21 peut traiter la variation de capacité pour déterminer la position de l'objet sur le film tactile 21.

Les électrodes sont formées par un matériaux conducteur, tel que l'oxyde d'indium et d'étain, le cuivre, l'argent ou un matériau à base de cuivre ou d'argent. Les électrodes sont disposées sur un ou plusieurs substrats, qui peuvent être constitués d'un matériau diélectrique.

Des pistes de matériau conducteur sont également disposées sur le substrat du film tactile 21 et sont configurées pour coupler les électrodes à des plots de connexion. Les plots de connexion permettent le couplage des pistes au contrôleur 31 via une nappe 33 et à transmettre des signaux de variation de capacité au contrôleur 31.

Le contrôleur 31 peut être relié au microcontrôleur 29 via un port USB par exemple. La caméra 25 peut être reliée au microcontrôleur 29 via une liaison filaire ou bien via un protocole sans fil, par exemple selon la norme Bluetooth ou bien la norme WIFI.

Bien que la présente invention ait été décrite en se référant à des modes ou exemples de réalisation spécifiques, des modifications et des changements peuvent bien entendu être réalisés sur ces modes ou exemples de réalisation sans sortir de la portée générale de l'invention telle que définie par les revendications. La description et les dessins doivent être considérés dans un sens illustratif plutôt que restrictif.

## Revendications

1. Installation sportive (11) comprenant :
- une enceinte (13) délimitant au moins partiellement un terrain de sport (15), l'enceinte (13) comprenant au moins une paroi transparente (17), et
- un système d'interface (19), disposé à l'extérieur de l'enceinte (13), le système d'interface (19) comprenant :
∘ un film tactile (21) agencé contre la paroi transparente (17), le film tactile (21) comprenant une pluralité d'électrodes agencées dans un substrat, le film tactile (21) étant configuré pour recevoir une commande d'un utilisateur, et
∘ un écran (23) disposé en regard du film tactile (21) permettant d'afficher une partie d'une interface utilisateur d'une application sportive déterminée en fonction de la commande de l'utilisateur.

2. Installation sportive (11) selon la revendication 1, dans laquelle la paroi transparente (17) comprend une surface intérieure (17b), faisant face à l'intérieur de l'enceinte (13) et une surface extérieure (17a), faisant face à l'extérieur de l'enceinte (13), le film tactile (21) étant fixé sur la surface extérieure (17a) de la paroi transparente (17).

3. Installation sportive (11) selon l'une des revendications 1 ou 2, dans laquelle l'écran (23) est superposé au film tactile (21), de sorte que depuis l'intérieur de l'enceinte (13), l'écran (23) soit visible à travers le film tactile (21).

4. Installation sportive (11) selon l'une des revendications précédentes, dans laquelle l'écran (23) est disposé à distance du film tactile (21).

5. Installation sportive (11) selon l'une des revendications précédentes, dans laquelle l'écran (23) est disposé à une distance du film tactile (21) inférieure ou égale à 10 cm.

6. Installation sportive (11) selon l'une des revendications précédentes, dans laquelle le système d'interface (19) comprend un microcontrôleur (29) configuré pour permettre l'affichage sur l'écran (23) de la partie de l'interface utilisateur déterminée en fonction de la commande de l'utilisateur via le film tactile (21).

7. Installation sportive (11) selon la revendication 6, dans laquelle la commande de l'utilisateur est déterminée en fonction de données de positionnement d'un objet, tel que le doigt de l'utilisateur, amené à proximité du film tactile (21).

8. Installation sportive (11) selon la revendication 7, dans laquelle le système d'interface (19) comprend un contrôleur (31) du film tactile (21), configuré pour générer des données de positionnement de l'objet amené à proximité du film tactile (21) en fonction de mesures réalisées au moyen des électrodes.

9. Installation sportive (11) selon l'une des revendications précédentes, dans laquelle le système d'interface (19) comprend un système d'enregistrement, par exemple une caméra (25), relié au microcontrôleur (29).

10. Installation sportive (11) selon la revendication 9, comprenant un bras (27) disposé à l'extérieur de l'enceinte (13) et configuré pour porter le système d'enregistrement.
